# EUROPÄISCHE PATENTSCHRIFT

(11) **EP 3 652 054 B1**
(45) Veröffentlichungstag und Bekanntmachung des Hinweises auf die Patenterteilung: **28.07.2021**
(21) Anmeldenummer: 18724826.5
(22) Anmeldetag: 09.05.2018
(51) Int. Cl.: B62K 21/00, B62D 6/00

(54) **VERFAHREN UND VORRICHTUNG ZUR KURVENSTABILISIERUNG EINES FAHRRADS**
METHOD AND APPARATUS FOR CORNERING STABILIZATION OF A BICYCLE
PROCÉDÉ ET DISPOSITIF DE STABILISATION DE COURBE D'UNE BICYCLETTE

(30) Priorität: 14.07.2017 DE 102017212123
(43) Veröffentlichungstag der Anmeldung: 20.05.2020
(73) Patentinhaber: Robert Bosch GmbH, 70442 Stuttgart (DE)
(72) Erfinder: WIENSS, Andreas, 72800 Eningen Unter Achalm (DE); DACKERMANN, Tim, 72072 Tuebingen (DE); DAUER, Felix, 72074 Tuebingen (DE); MAIER, Oliver, 70186 Stuttgart (DE)
(86) Internationale Anmeldenummer: PCT/EP2018/062079
(87) Internationale Veröffentlichungsnummer: WO 2019/011502

(56) Entgegenhaltungen:
- DE-A1-102010 003 951
- DE-A1-102012 211 963

## Beschreibung

### Stand der Technik

Die Erfindung betrifft ein Verfahren, eine Recheneinheit und ein Fahrrad zur Kurvenstabilisierung des Fahrrads, wobei zur Stabilisierung Lenkeingriffe auf das Vorderrad des Fahrrads vorgesehen sind.

Fährt ein Fahrrad mit zu großer Geschwindigkeit, zu großer Schräglage oder zu großem Lenkwinkel in eine Kurve, kann es zum Untersteuern des Fahrrads kommen, was ein Rutschen von dessen Vorderrad zur Folge hat. In Folge dessen kann es zu einem Kontrollverlust und zu einem Sturz des Fahrers kommen.

In dem Dokument EP 2 829 464 A1 wird ein Verfahren zur Stabilisierung des Fahrrads ganz allgemein bei kritischen Fahrsituationen beschrieben. Zu starke Lenkbewegungen des Fahrers werden hierbei durch eine Gegenbewegung des Lenkers ausgeglichen.

In dem Dokument DE 10 2010 003 951 A1 wird auf den Fall eines Übersteuerns eines Zweirads während einer Kurvenfahrt eingegangen, wenn das Hinterrad seitlich wegrutscht. Hierbei wird ein Lenkmoment auf die Lenkung des Zweirads in Richtung Kurveninnenseite aufgebracht, wodurch ein größerer Kurvenradius eingeleitet wird.

In dem Dokument DE 10 2012 211 963 A1 wird ein Verfahren zur Kurvenstabilisierung mit den Merkmalen der Präambel des Anspruchs 1 offenbart. Zur Stabilisierung wird eine Änderung des Brems- bzw. Motormoments verwendet.

Es ist jedoch nicht bekannt, wie einem Untersteuern eines Fahrrads durch ein wegrutschendes Vorderrad während der Kurvenfahrt entgegengewirkt werden kann.

### Offenbarung der Erfindung

Um diesem Problem zu begegnen, werden erfindungsgemäß ein Verfahren und eine Recheneinheit, die das Verfahren ausführt, zur Kurvenstabilisierung eines Fahrrads vorgeschlagen. Außerdem wird ein Fahrrad vorgeschlagen, welches die erfindungsgemäße Recheneinheit aufweist.

In dem Verfahren zur Kurvenstabilisierung eines Fahrrads sind zur Stabilisierung Lenkeingriffe auf das Vorderrad des Fahrrads vorgesehen. Es werden zunächst die Größen erfasst, welche nötig sind, um einen aktuellen Ist-Schwimmwinkel, wie auch einen sicherheitskritischen Grenz-Schwimmwinkel des Vorderrads während der Kurvenfahrt ermitteln zu können. Neben der Geschwindigkeit des Fahrrads werden hierbei ebenfalls eine Schräglage des Vorderrads, wie auch ein Lenkwinkel des Fahrrads erfasst, da auch diese Parameter einen Einfluss auf die Querbeschleunigung des Fahrrads während der Kurvenfahrt haben. Bei der Schräglage des Vorderrads handelt es sich um die Neigung des Vorderrads relativ zu der Fahrbahnoberfläche. Der Lenkwinkel des Fahrrads bezeichnet die Stellung der Radmittenebene relativ zu der Längsachse des Fahrrads. Der Ist-Schwimmwinkel des Vorderrads bezeichnet den Winkel zwischen Trajektorie bzw. Bewegungsrichtung des Vorderrads und der Schnittlinie zwischen Radmittenebene und Fahrbahnebene. Während der Ist-Schwimmwinkel während einer gleichförmigen Geradeausfahrt des Fahrrads etwa 0° beträgt, vergrößert sich dieser während einer Kurvenfahrt und kann über die erfassten Größen berechnet werden. Der Grenz-Schwimmwinkel des Vorderrads bezeichnet den Schwimmwinkel, bei dem aufgrund der hohen Fliehkräfte während der Kurvenfahrt, das Vorderrad wegrutscht und das Fahrrad infolgedessen untersteuert. Der Grenz-Schwimmwinkel kann beispielsweise durch Vergleich der erfassten Größen mit hinterlegten Größen abgeschätzt werden. Hierbei können die hinterlegten Größen die Größen sein, bei denen in der Vergangenheit ein Wegrutschen des Fahrrads detektiert wurde. Der ermittelte Ist-Schwimmwinkel wird mit dem ermittelten Grenz-Schwimmwinkel verglichen und abhängig von dem Vergleich wird eine erste Drehung des Vorderrads in Richtung eines Kurvenmittelpunkts um eine Hochachse des Vorderrads erzeugt. Dadurch reduziert sich die Schräglage des Fahrrads und es richtet sich auf. Das Aufstellen des Fahrrads wird durch das Rückstellmoment verursacht, welches dem ausgeführten Lenkeinschlag aufgebrachten Drehmoment entgegenwirkt. Dieser Effekt tritt aufgrund des Nachlaufs zwischen gedacht verlängerter Lenkachse und Radaufstandspunkt ein. Durch das Aufrichten des Fahrzeugs wird die Fliehkraft auf das Fahrrad während der Kurvenfahrt verringert, welche auch für das Wegrutschen des Vorderrads verantwortlich ist, wodurch die Weiterfahrt des Fahrrads mit größerem Kurvenradius fortgesetzt werden kann. Auf die erste Drehung des Vorderrads folgt eine zweite Drehung des Vorderrads entgegen des Kurvenmittelpunkts um die Hochachse des Vorderrads. Somit kann die Weiterfahrt des Fahrrads mit größerem Kurvenradius und geringerer Schräglage fortgesetzt werden kann. Dies hat eine Vergrößerung des gefahrenen Kurvenradius und somit eine Verringerung des Ist-Schwimmwinkels zur Folge.

Vorzugsweise wird eine Haftungsgröße zwischen Vorderrad und Fahrbahnoberfläche erfasst, um den Grenz-Schwimmwinkel zusätzlich in Abhängigkeit dieser erfassten Information zu ermitteln. Die Haftung zwischen Vorderrad und Fahrbahnoberfläche ist ein wichtiges Kriterium, wenn es darum geht, abzuschätzen, wann das Vorderrad während einer Kurvenfahrt beginnt wegzurutschen und ein Untersteuern während der Kurvenfahrt einsetzt. So kann ein Reifen mit wenig Profil auf nassem Untergrund beispielsweise während einer Kurvenfahrt schneller Wegrutschen, als ein Reifen mit viel Profil auf trockenem Untergrund.

Eine weitere Größe, welche vorzugsweise zur Ermittlung des Grenz-Schwimmwinkels erfasst werden kann, ist die Bremskraft auf das Vorderrad. Je stärker das Vorderrad abgebremst wird, desto schneller beginnt es auch während einer Kurvenfahrt wegzurutschen.

Bevorzugt wird die erste Drehung des Vorderrads in Richtung des Kurvenmittelpunkts um die Hochachse des Vorderrads erzeugt, wenn der Ist-Schwimmwinkel den Grenz-Schwimmwinkel überschreitet. Hierbei wird also mit der ersten Drehung des Vorderrads reagiert, falls ein Wegrutschen des Vorderrads detektiert wird. Alternativ wird bevorzugt präventiv die erste Drehung des Vorderrads erzeugt, wenn das Verhältnis von Ist-Schwimmwinkel zu Grenz-Schwimmwinkel einen sicherheitskritischen Schwellenwert übersteigt. Der sicherheitskritische Schwellenwert wird hierbei vorzugsweise so gesetzt, dass ein Wegrutschen des Vorderrads noch nicht eingesetzt hat und somit das Fahrrad einfacher für die Kurvenfahrt stabilisiert werden kann.

Vorzugsweise wird erst ein Aufrichten des Fahrrads durch die erzeugte erste Drehung des Vorderrads erkannt, bevor anschließend die zweite Drehung des Vorderrads erzeugt wird. Das Aufrichten des Fahrrads kann zum Beispiel durch eine während der ersten Drehung erfassten, abnehmenden Schräglage des Fahrrads erkannt werden. So kann sichergestellt werden, dass das Erzeugen der zweiten Drehung des Vorderrads auch wirklich sinnvoll ist.

Vorzugsweise wird die zweite Drehung nach Ablauf einer vorgegebenen Zeit folgend auf die erste erzeugte Drehung erzeugt. Diese einfache Methode erspart Rechenkapazität. Bevorzugt ist die Zeitschwelle hierbei immer konstant gleich gesetzt, sodass beispielsweise nach 1 Sekunde auf die erste Drehung die zweite Drehung des Vorderrads folgt. So kann sichergegangen werden, dass erste und zweite Drehung nicht zu schnell aufeinander folgen. Durch eine zu schnelle Abfolge der Drehungen läuft der Fahrer Gefahr, die Kontrolle über den Lenker zu verlieren. Alternativ wird die Zeitschwelle jedoch abhängig von der zu dem Zeitpunkt der ersten erzeugten Drehung erfassten Schräglage des Fahrrads gesetzt. Ist die Schräglage des Vorderrads während der ersten Drehung vergleichsweise klein, so benötigt das Fahrrad weniger Zeit sich aufzurichten, als bei einer vergleichsweise größeren Schräglage des Fahrrads. Die Zeitschwelle kann in diesem Fall entsprechend kleiner gewählt werden. Alternativ kann wird die Zeitschwelle abhängig von der erfassten Geschwindigkeit des Fahrrads gesetzt. Je höher die Geschwindigkeit des Fahrrads, desto geringer die Zeitschwelle. Entsprechend schnell folgt hierbei auf die erste Drehung die zweite Drehung.

Die Erfindung umfasst zudem eine Recheneinheit, welche das erfindungsgemäße Verfahren ausführt. Zusätzlich umfasst die Erfindung ein Fahrrad, welches die Recheneinheit und eine erste Erfassungseinheit umfasst. Die erste Erfassungseinheit dient vorzugsweise zur Erfassung einer Geschwindigkeit des Fahrrads. Hierbei kann es sich beispielsweise um einen Drehzahlensensor an dem Vorder- und/oder Hinterrad des Fahrrads, wie aber auch um einen Abstandssensor handeln, bei dem über den Dopplereffekt die Geschwindigkeit des Fahrrads erfasst wird. Das Fahrrad umfasst des Weiteren eine zweite Erfassungseinheit, die zur Erfassung der Schräglage des Fahrrads ausgebildet ist. Hierbei kann es sich beispielsweise um einen am Rahmen angebrachten Neigungssensor handeln. Zusätzlich umfasst das Fahrrad eine dritte Erfassungseinheit, die dazu ausgebildet ist, den Lenkwinkel des Fahrrads zu erfassen. Hierbei kann es sich beispielsweise um einen Lenkwinkelsensor handeln. Zusätzlich umfasst das Fahrrad einen Aktuator, der dazu ausgebildet ist, in Abhängigkeit einer Ansteuerung durch die Recheneinheit einen Eingriff in einen Lenkwinkel des Fahrrads zu erzeugen. Vorzugsweise umfasst das Fahrrad zusätzlich eine vierte Erfassungseinheit, die dazu ausgebildet ist, eine Information über eine Haftung zwischen Vorderrad und Fahrbahnoberfläche erfasst. Hierbei kann es sich beispielweise um einen Sensor, wie z.B. eine Kamera, handeln, der die Beschaffenheit der Fahrbahnoberfläche detektiert. Beispielsweise können aber auch über einen am Vorderrad angeordneten Drehzahlsensor Rückschlüsse über die Haftung zwischen Vorderrad und Fahrbahnoberfläche gezogen werden. Des Weiteren umfasst das Fahrrad bevorzugt eine weitere fünfte Erfassungseinheit, mit der eine Bremskraft auf das Vorderrad erfasst werden kann. Hierbei kann es sich beispielsweise um einen Sensor handeln, der den hydraulischen Bremsdruck oder die mechanische Kraft auf das Vorderrad erfasst.

### Kurze Beschreibung der Zeichnungen

Figur 1 zeigt in der allgemeinen Ansicht einen Aufbau eines erfindungsgemäßen Fahrrads mit einer Recheneinheit zur Ausführung eines Verfahrens zur Kurvenstabilisierung des Fahrrads.
Figur 2 zeigt eine Ausführungsform der erfindungsgemäßen Recheneinheit.
Figur 3 zeigt einen erfindungsgemäßen Verfahrensablauf zur Kurvenstabilisierung eines Fahrrads.

### Ausführungsbeispiele

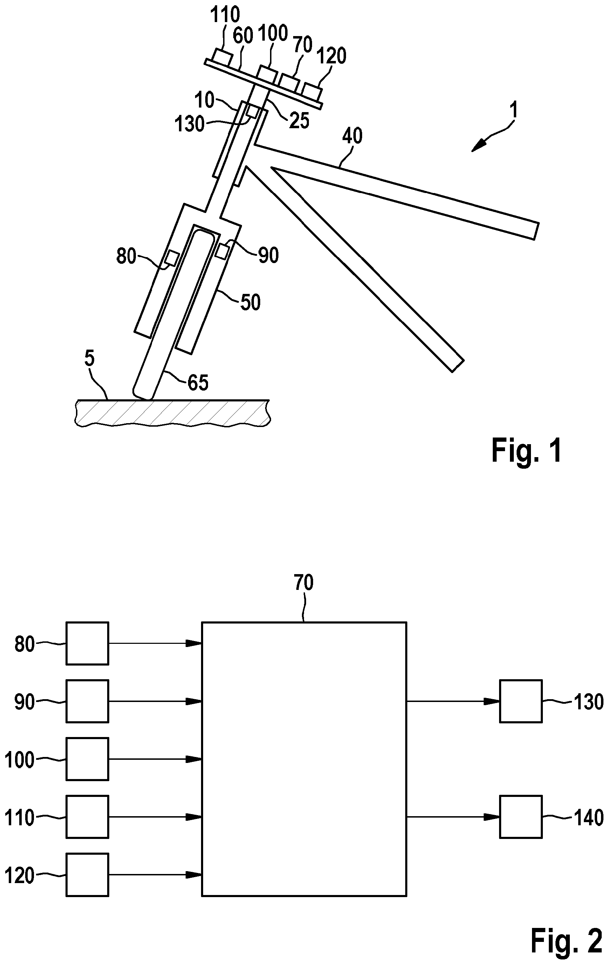

Figur 1 zeigt in der Übersicht beispielhaft einen Aufbau des Fahrrads mit einer Recheneinheit 70 zur Kurvenstabilisierung des Fahrrads 1. Die Recheneinheit 70 ist hierbei beispielhaft am Lenker 60 des Fahrrads 1 angeordnet. Die Recheneinheit 70 kann aber auch an einer anderen Komponente des Fahrrads angeordnet sein oder in einer, am Fahrrad angeordneten Erfassungseinheit 80, 90, 100, 110 oder 120 integriert sein. Ein Steuerrohr 10, durch welches eine in dem Steuerrohr drehbar gelagerte Lenkstange 50 hindurchläuft, ist hierbei an einem Fahrradrahmen 40 angebracht. Die Lenkstange 50 ist wiederum mit dem Lenker 60 des Fahrrads 1 verbunden und vollzieht bei einem Lenkeinschlag eine Drehbewegung, um das Vorderrad 65 des Fahrrads entsprechend ebenfalls auszulenken. An der Lenkstange 50 ist eine erste Erfassungseinheit 80 angeordnet, die dazu ausgebildet ist, die Geschwindigkeit des Fahrrads zu erfassen. Beispielsweise repräsentiert die erste Erfassungseinheit einen Drehzahlsensor, welcher über die erfasste Drehzahl die Geschwindigkeit des Fahrrads 1 ermittelt. An der Lenkstange 50, im Bereich des Vorderrads 65, ist zudem eine zweite Erfassungseinheit 90 angeordnet, welcher dazu ausgebildet ist, die Schräglage des Vorderrads 65 zu erfassen. Es kann sich hierbei beispielsweise um einen Neigungssensor handeln. Weiterhin ist eine dritte Erfassungseinheit 100 an dem Lenker 60 des Fahrrads 1 angeordnet. Die dritte Erfassungseinheit 100 ist hierbei dazu ausgebildet, einen Lenkwinkel des Fahrrads 1 zu erfassen. Hierbei kann es sich beispielsweise um einen Lenkwinkelsensor handeln. Weiterhin ist ein Aktuator 130 im Bereich des Durchlaufs des Steuerrohrs 10 durch die Lenkstange 50 angeordnet. Dieser Aktuator 130 ist dazu ausgebildet, einen Eingriff in einen Lenkeingriff des Fahrrads durchzuführen. Hierbei kann es sich z.B. um eine Feder handeln, welche mit Steuerrohr 10 und Lenkstange 50 verbunden ist und welche bei Durchführung eines Lenkeingriffs automatisch eingreift und eine Auslenkung in die entsprechende Lenkrichtung ausführt.

Zusätzlich ist optional an dem Fahrrad 1 eine vierte Erfassungseinheit 110 an dem Lenker 60 angeordnet. Diese ist dazu ausgebildet, eine Haftungsgröße zwischen Vorderrad und Fahrbahnoberfläche zu erfassen. Hierbei kann die vierte Erfassungseinheit 11 beispielsweise eine Kamera repräsentieren, die während der Fahrt die Beschaffenheit der Fahrbahnoberfläche detektiert, woraus Rückschlüsse auf die Haftung zwischen Vorderradreifen und Fahrbahnoberfläche gezogen werden können. Es kann sich aber auch um einen Drehzahlensensor, ähnlich des Funktionsprinzips beim ABS-System handeln.

Des Weiteren ist optional an dem Lenker 60 des Fahrrads 1 eine fünfte Erfassungseinheit 120 am Fahrrad angeordnet. Diese ist dazu ausgebildet, eine Bremskraft auf das Vorderrad zu erfassen. Die fünfte Erfassungseinheit 120 kann hierzu beispielsweise den erzeugten Bremsdruck und/oder die mechanische Bremskraft auf das Vorderrad erfassen.

Figur 2 zeigt eine Ausführungsform der erfindungsgemäßen Recheneinheit 70 zur Kurvenstabilisierung eines Fahrrads mittels Lenkeingriffe auf das Vorderrad. Die Recheneinheit 70 ist hierbei dazu ausgebildet, die erfasste Geschwindigkeit von der ersten Erfassungseinheit 80, die erfasste Schräglage von der zweiten Erfassungseinheit 90 und den erfassten Lenkwinkel des Fahrrads von der dritten Erfassungseinheit 100 bei einer erkannten Kurvenfahrt zu empfangen. Die Recheneinheit 70 ist dazu ausgebildet, den Ist-Schwimmwinkel, sowie den Grenz-Schwimmwinkel in Abhängigkeit der drei empfangenen Größen zu ermitteln.

Während der Ist-Schwimmwinkel den aktuell, direkt aus den erfassten Größen ermittelbaren Schwimmwinkel während der Kurvenfahrt repräsentiert, bezeichnet der Grenz-Schwimmwinkel den theoretischen Schwimmwinkel, bei dem das Vorderrad wegrutschen und infolgedessen das Fahrrad untersteuern würde. Der Grenz-Schwimmwinkel bezeichnet also eine noch mögliche Vergrößerung der aktuell erfassten Schräglage und/oder der aktuell erfassten Geschwindigkeit und/oder des aktuell erfassten Lenkwinkels, bevor es zu einem Wegrutschen des Vorderrads kommt. Diese mögliche Vergrößerung der aktuell erfassten Größen kann beispielsweise durch Vergleich der erfassten Größen mit hinterlegten Größen abgeschätzt werden. Hierbei können die hinterlegten Größen die Größen sein, bei denen in der Vergangenheit ein Wegrutschen des Fahrrads detektiert wurde. Es kann aber auch zum Beispiel über eine weitere Erfassungseinheit der aktuelle Schwerpunkt des Fahrrads mit dem Fahrer erfasst werden, worüber dann wiederum bestimmt werden kann, welche maximale Schräglage das Fahrrad besitzen darf, bevor das Vorderrad wegrutscht.

Darüber hinaus ist die Recheneinheit 70 dazu ausgebildet, den Ist-Schwimmwinkel mit dem Grenz-Schwimmwinkel zu vergleichen und in Abhängigkeit des Vergleichs erste Steuersignale zur Ansteuerung des Aktuators 130 zu erzeugen, sodass eine erste Drehung des Vorderrads in Richtung des Kurvenmittelpunkts um eine Hochachse des Vorderrads erzeugt wird. Die erste Drehung wird hier derart ausgeführt, dass sich das Fahrrad bei der Kurvenfahrt aufrichtet. Zusätzlich erzeugt die Recheneinheit 70 zweite Steuersignale zur Ansteuerung des Aktuators 130, sodass folgend auf die erste Drehung eine zweite Drehung des Vorderrads entgegen der Richtung des Kurvenmittelpunkts um die Hochachse des Vorderrads zur Stabilisierung des Fahrrads bei einer Kurvenfahrt erzeugt wird.

Optional ist die Recheneinheit 70 dazu ausgebildet, in Abhängigkeit von einer vierten Erfassungseinheit 110 erfassten Information über die Haftung zwischen Vorderrad und Fahrbahnoberfläche den Grenz-Schwimmwinkel zu ermitteln.

Des Weiteren ist die Recheneinheit 70 optional dazu ausgebildet, in Abhängigkeit von der mittels der fünften Erfassungseinheit 120 erfassten Bremskraft auf das Vorderrad, den Grenz-Schwimmwinkel zu ermitteln.

Optional gibt die Recheneinheit 70 bei Feststellung eines möglichen Wegrutschens des Vorderrads ein Warnsignal an eine Ausgabeeinheit 140 aus. Die Ausgabeeinheit 90 ist hierbei dazu geeignet, eine Warnung an einen Fahrer des Fahrrads bei einem möglichen Wegrutschen des Vorderrads auszugeben. Die Ausgabeeinheit 90 kann beispielsweise ein Display repräsentieren, welches dem Fahrradfahrer die Warnung visuell und/oder optisch anzeigt.

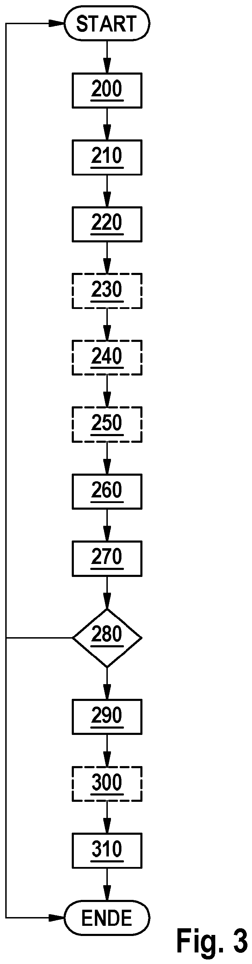

Die Recheneinheit 70 führt das in der Figur 3 dargestellte Ausführungsbeispiel eines erfindungsgemäßen Verfahrens aus.

Figur 3 zeigt einen erfindungsgemäßen ersten Verfahrensablauf zur Kurvenstabilisierung eines Fahrrads. Hierbei wird in einem ersten Verfahrensschritt 200 eine Geschwindigkeit des Fahrrads erfasst. In einem auf den Verfahrensschritt 200 folgenden Verfahrensschritt 210 wird eine Schräglage des Fahrrads bei der Kurvenfahrt erfasst. In einem auf den Verfahrensschritt 210 folgenden Verfahrensschritt 220 wird ein Lenkwinkel des Fahrrads erfasst. Die Verfahrensschritte müssen hierbei nicht in der dargestellten Reihenfolge ausgeführt werden. Optional können die Verfahrensschritte auch simultan ausgeführt werden.

In einem auf den Verfahrensschritt 220 folgenden Verfahrensschritt 260 wird ein Ist-Schwimmwinkel des Vorderrads in Abhängigkeit der erfassten Geschwindigkeit, der erfassten Schräglage und des erfassten Lenkwinkels des Fahrrads ermittelt.

In einem auf den Verfahrensschritt 260 folgenden Verfahrensschritt 270 wird ein Grenz-Schwimmwinkel des Vorderrads in Abhängigkeit der erfassten Geschwindigkeit, der erfassten Schräglage und des erfassten Lenkwinkels des Fahrrads ermittelt.

In einem auf den Verfahrensschritt 270 folgenden Verfahrensschritt 280 wird der Ist-Schwimmwinkel mit dem Grenz-Schwimmwinkel des Vorderrads verglichen. Wird hierbei festgestellt, dass der Ist-Schwimmwinkel kleiner als der Grenz-Schwimmwinkel ist, dann wird das Verfahren wieder von vorne gestartet oder alternativ beendet. Wird jedoch festgestellt, dass der Ist-Schwimmwinkel größer als der Grenz-Schwimmwinkel des Vorderrads ist, beginnt das Vorderrad Wegzurutschen und ein Untersteuern des Fahrrads in der Kurve setzt ein. Optional kann bei dem Vergleich auch geprüft werden, ob das Verhältnis von Ist-Schwimmwinkel zu Grenz-Schwimmwinkel einen sicherheitskritischen Schwellenwert überschritten hat. Hierbei wird folglich nicht auf ein einsetzendes Wegrutschen des Vorderrads reagiert, sondern präventiv gehandelt, bevor das Wegrutschen überhaupt einsetzt.

Sowohl bei Überschreitung des Grenz-Schwimmwinkels durch den Ist-Schwimmwinkel, wie auch bei Überschreitung des sicherheitskritischen Schwellenwertes durch das Verhältnis von Ist-Schwimmwinkel zu Grenz-Schwimmwinkel, wird in einem auf den Verfahrensschritt 280 folgenden Verfahrensschritt 290 eine erste Drehung des Vorderrads in Richtung des Kurvenmittelpunkts um die Hochachse des Vorderrads derart erzeugt, dass sich das Fahrrad während der Kurvenfahrt wieder aufrichtet.

In einem auf den Verfahrensschritt 290 folgenden Verfahrensschritt 310 wird eine zweite Drehung des Vorderrads entgegen der Richtung des Kurvenmittelpunkts um die Hochachse des Vorderrads erzeugt, um den zu fahrenden Kurvenradius zu vergrößern und das Fahrrad wieder zu stabilisieren.

Darauf folgend wird das Verfahren beendet.

Optional wird in einem auf den Verfahrensschritt 220 folgenden Verfahrensschritt 230 eine Haftungsgröße zwischen Vorderrad und Fahrbahnoberfläche erfasst. Diese Größe wird anschließend in Verfahrensschritt 270 bei der Ermittlung des Grenz-Schwimmwinkels mit berücksichtigt.

Weiterhin wird optional in einem auf den Verfahrensschritt 230 folgenden Verfahrensschritt 240 eine Bremskraft auf das Vorderrad erfasst. Die erfasste Bremskraft wird anschließend in Verfahrensschritt 270 bei der Ermittlung des Grenz-Schwimmwinkels mit berücksichtigt.

Des Weiteren wird optional in einem auf den Verfahrensschritt 240 folgenden Verfahrensschritt 250 ein Abstand der Fahrradpedale zu der Fahrbahnoberfläche erfasst. Hierbei wird vorzugsweise nur der Abstand des Pedals benötigt, welches in Richtung des Kurvenmittelpunkts am Fahrrad angeordnet ist. Wird der Abstand eines Pedals zu der Fahrbahnoberfläche bei Schräglage des Fahrrads in der Kurve zu gering, besteht die Gefahr, dass das Pedal aufsetzt und das Fahrrad entsprechend beginnt wegzurutschen. Deshalb wird der erfasste Pedalabstand anschließend in Verfahrensschritt 270 bei der Ermittlung des Grenz-Schwimmwinkels mit berücksichtigt.

Optional wird in einem auf den Verfahrensschritt 290 folgenden Verfahrensschritt 300 ein Aufrichten des Fahrrads durch die erzeugte erste Drehung des Vorderrads erkannt. Erst wenn das Fahrrad soweit aufgerichtet ist, dass das Vorderrad nicht mehr wegrutscht, wird in Verfahrensschritt 310 die zweite Drehung des Vorderrads erzeugt.

Optional folgt weiterhin die zweite Drehung in Verfahrensschritt 310 auf die erste Drehung 290 nach einer vorgegebenen Zeit.

## Patentansprüche

1. Verfahren zur Kurvenstabilisierung eines Fahrrads (1), wobei zur Stabilisierung Lenkeingriffe auf ein Vorderrad (65) des Fahrrads (1) vorgesehen sind und das Verfahren die folgenden Schritte aufweist:
- Erfassen (200, 210, 220) einer Geschwindigkeit, einer Schräglage und eines Lenkwinkels des Fahrrads (1) bei einer Kurvenfahrt und
- Ermitteln (260) eines Ist-Schwimmwinkels des Vorderrads (65) in Abhängigkeit der erfassten Geschwindigkeit, der Schräglage und des Lenkwinkels und
- Ermitteln (270) eines Grenz-Schwimmwinkels des Vorderrads (65) in Abhängigkeit der erfassten Geschwindigkeit, der Schräglage und des Lenkwinkels und
- Vergleichen (280) des Ist-Schwimmwinkels mit dem Grenz-Schwimmwinkel des Vorderrads (65),
**dadurch gekennzeichnet, dass** das Verfahren die folgenden Schritte aufweist:
- Erzeugen (290) einer ersten Drehung des Vorderrads (65) in Richtung eines Kurvenmittelpunkts um eine Hochachse des Vorderrads (65) in Abhängigkeit des Vergleichs des Ist-Schwimmwinkels mit dem Grenz-Schwimmwinkel derart, dass sich das Fahrrad (1) bei der Kurvenfahrt aufrichtet und
- Erzeugen (310) einer zweiten Drehung des Vorderrads (65) entgegen der Richtung des Kurvenmittelpunkts um die Hochachse des Vorderrads (65) zur Kurvenstabilisierung des Fahrrads (1).

2. Verfahren nach Anspruch 1, **dadurch gekennzeichnet, dass** das Verfahren die folgenden zusätzlichen Schritte aufweist:
- Erfassen (230) einer Haftungsgröße zwischen Vorderrad (65) und Fahrbahnoberfläche und
- Ermitteln (270) des Grenz-Schwimmwinkels zusätzlich in Abhängigkeit der erfassten Haftungsgröße.

3. Verfahren nach einem der Ansprüche 1 oder 2, **dadurch gekennzeichnet, dass** das Verfahren die folgenden zusätzlichen Schritte aufweist:
- Erfassen (240) einer Bremskraft auf das Vorderrad (65) und
- Ermitteln (270) des Grenz-Schwimmwinkels zusätzlich in Abhängigkeit der erfassten Bremskraft.

4. Verfahren nach einem der Ansprüche 1 bis 3, **dadurch gekennzeichnet, dass** die erste Drehung des Vorderrads (65) in Abhängigkeit einer Überschreitung des Grenz-Schwimmwinkels durch den Ist-Schwimmwinkels erzeugt wird.

5. Verfahren nach einem der Ansprüche 1 bis 3, **dadurch gekennzeichnet, dass** die erste Drehung des Vorderrads (65) in Abhängigkeit einer Überschreitung eines sicherheitskritischen Schwellenwerts durch das Verhältnis von Ist-Schwimmwinkel zu Grenz-Schwimmwinkel erzeugt wird.

6. Verfahren nach einem der Ansprüche 1 bis 5, **dadurch gekennzeichnet, dass** das Verfahren die folgenden zusätzlichen Verfahrensschritte aufweist:
- Erkennen (300) eines Aufrichtens des Fahrrads (1) durch die erzeugte erste Drehung und
- Erzeugen (310) der zweiten Drehung in Abhängigkeit des erkannten Aufrichtens des Fahrrads (1).

7. Verfahren nach einem der Ansprüche 1 bis 6, **dadurch gekennzeichnet, dass** das Verfahren die folgenden zusätzlichen Verfahrensschritte umfasst:
- Erzeugen (310) der zweiten Drehung des Vorderrads (65) nach einer vorgegeben Zeit im Anschluss auf die erzeugte erste Drehung.

8. Recheneinheit (70) zur Ausführung eines Verfahrens zur Kurvenstabilisierung eines Fahrrads nach einem der Ansprüche 1 bis 7 , wobei die Recheneinheit (70) dazu ausgebildet ist,
- eine Geschwindigkeit von einer ersten Erfassungseinheit (80), eine Schräglage von einer zweiten Erfassungseinheit (90) und einen Lenkwinkel von einer dritten Erfassungseinheit (100) des Fahrrads (1) bei einer Kurvenfahrt zu empfangen und
- einen Ist-Schwimmwinkel des Vorderrads (65) in Abhängigkeit der empfangenen Geschwindigkeit, der Schräglage und des Lenkwinkels zu ermitteln und
- einen Grenz-Schwimmwinkel des Vorderrads (65) in Abhängigkeit der empfangenen Geschwindigkeit, der Schräglage und des Lenkwinkels zu ermitteln und
- den Ist-Schwimmwinkel mit dem Grenz-Schwimmwinkel des Vorderrads (65) zu vergleichen und
- erste Steuersignale für einen an einer Lenkstange des Fahrrads angeordneten Aktuator zur Erzeugung einer ersten Drehung des Vorderrads (65) in Richtung des Kurvenmittelpunks um eine Hochachse des Vorderrads (65) in Abhängigkeit des Vergleichs des Ist-Schwimmwinkels mit dem Grenz-Schwimmwinkel des Vorderrads (65) derart zu erzeugen, dass sich das Fahrrad (1) bei der Kurvenfahrt aufrichtet und
- zweite Steuersignale für den Aktuator zur Erzeugung einer zweiten Drehung des Vorderrads (65) entgegen der Richtung des Kurvenmittelpunkts um die Hochachse des Vorderrads (65) zur Kurvenstabilisierung des Fahrrads (1) zu erzeugen.

9. Fahrrad (1) zur Ausführung eines Verfahrens zur Kurvenstabilisierung des Fahrrads nach einem der Ansprüche 1 bis 7, aufweisend
- eine Recheneinheit (70) nach Anspruch 8 und
- einen Aktuator (130), ausgebildet zur Durchführung eines Lenkeingriffs auf ein Vorderrad des Fahrrads (1) und
- eine ersten Erfassungseinheit (80), ausgebildet zur Erfassung einer Geschwindigkeit des Fahrrads (1) und
- eine zweiten Erfassungseinheit (90), ausgebildet zur Erfassung einer Schräglage des Fahrrads (1)
- eine dritten Erfassungseinheit (90), ausgebildet zur Erfassung eines Lenkwinkels des Fahrrads (1),
wobei die Recheneinheit (70) dazu ausgebildet ist, in Abhängigkeit eines Vergleichs eines ermittelten Ist-Schwimmwinkels mit einem ermittelten Grenz-Schwimmwinkels des Fahrrads (1) während einer erkannten Kurvenfahrt, eine Ansteuerung des Aktuators (130) zur Erzeugung einer ersten Drehung des Vorderrads (65) in Richtung des Kurvenmittelpunks um eine Hochachse des Vorderrads (65) und eine zweite Drehung des Vorderrads (65) entgegen der Richtung des Kurvenmittelpunkts um die Hochachse des Vorderrads (65) zu erzeugen.

10. Fahrrad nach Anspruch 9, **dadurch gekennzeichnet, dass** das Fahrrad zusätzlich
- eine vierte Erfassungseinheit (110), ausgebildet zur Erfassung einer Haftungsgröße zwischen Vorderrad (65) und Fahrbahnoberfläche (5), aufweist,
wobei die Recheneinheit (70) dazu ausgebildet ist, den Grenz-Schwimmwinkel zusätzlich in Abhängigkeit der erfassten Haftungsgröße zu ermitteln.

11. Fahrrad nach einem der Ansprüche 9 oder 10, **dadurch gekennzeichnet, dass** das Fahrrad zusätzlich
- eine fünfte Erfassungseinheit (120), ausgebildet zur Erfassung einer Bremskraft auf das Vorderrad (65), aufweist,
wobei die Recheneinheit (70) dazu ausgebildet ist, den Grenz-Schwimmwinkel zusätzlich in Abhängigkeit der erfassten Bremskraft zu ermitteln.

## Claims

1. Method for corner stabilization of a bicycle (1), steering interventions on a front wheel (65) of the bicycle (1) being provided for stabilization purposes, and the method having the following steps:
- detecting (200, 210, 220) of a speed, a lean angle and a steering angle of the vehicle (1) when cornering, and
- determining (260) of an actual side slip angle of the front wheel (65) in a manner which is dependent on the detected speed, the lean angle and the steering angle, and
- determining (270) of a limit side slip angle of the front wheel (65) in a manner which is dependent on the detected speed, the lean angle and the steering angle, and
- comparing (280) of the actual side slip angle with
the limit side slip angle of the front wheel (65), **characterized in that** the method has the following steps:
- producing (290) of a first rotation of the front wheel (65) in the direction of a corner centre point about a vertical axis of the front wheel (65) in a manner which is dependent on the comparison of the actual side slip angle with the limit side slip angle in such a way that the bicycle (1) rights itself when cornering, and
- producing (310) of a second rotation of the front wheel (65) counter to the direction of the corner centre point about the vertical axis of the front wheel (65) for corner stabilization of the bicycle (1) .

2. Method according to Claim 1, **characterized in that** the method has the following additional steps:
- detecting (230) of a grip variable between the front wheel (65) and the roadway surface, and
- determining (270) of the limit side slip angle in addition in a manner which is dependent on the detected grip variable.

3. Method according to either of Claims 1 or 2, **characterized in that** the method has the following additional steps:
- detecting (240) of a brake force on the front wheel (65), and
- determining (270) of the limit side slip angle in addition in a manner which is dependent on the detected brake force.

4. Method according to one of Claims 1 to 3, **characterized in that** the first rotation of the front wheel (65) is produced in a manner which is dependent on the actual side slip angle exceeding the limit side slip angle.

5. Method according to one of Claims 1 to 3, **characterized in that** the first rotation of the front wheel (65) is produced in a manner which is dependent on the ratio of actual side slip angle to limit side slip angle exceeding a safety-critical threshold value.

6. Method according to one of Claims 1 to 5, **characterized in that** the method has the following additional method steps:
- detecting (300) of righting of the bicycle (1) by way of the produced first rotation, and
- producing (310) of the second rotation in a manner which is dependent on the detected righting of the bicycle (1).

7. Method according to one of Claims 1 to 6, **characterized in that** the method comprises the following additional method steps:
- producing (310) of the second rotation of the front wheel (65) after a predefined time following the produced first rotation.

8. Computing unit (70) for carrying out a method for corner stabilization of a bicycle according to one of Claims 1 to 7, the computing unit (70) being configured
- to receive a speed from a first detection unit (80), to receive a lean angle from a second detection unit (90), and to receive a steering angle from a third detection unit (100) of the bicycle (1) when cornering, and
- to determine an actual side slip angle of the front wheel (65) in a manner which is dependent on the received speed, the lean angle and the steering angle, and
- to determine a limit side slip angle of the front wheel (65) in a manner which is dependent on the received speed, the lean angle and the steering angle, and
- to compare the actual side slip angle with the limit side slip angle of the front wheel (65), and
- to generate first control signals for an actuator which is arranged on a handlebar of the bicycle in order to produce a first rotation of the front wheel (65) in the direction of the corner centre point about a vertical axis of the front wheel (65) in a manner which is dependent on the comparison of the actual side slip angle with the limit side slip angle of the front wheel (65), in such a way that the bicycle (1) rights itself when cornering, and
- to generate second control signals for the actuator in order to produce a second rotation of the front wheel (65) counter to the direction of the corner centre point about the vertical axis of the front wheel (65) for corner stabilization of the bicycle (1) .

9. Bicycle (1) for carrying out a method for corner stabilization of the bicycle according to one of Claims 1 to 7, having
- a computing unit (70) according to Claim 8, and
- an actuator (130), configured to carry out a steering intervention on a front wheel of the bicycle (1), and
- a first detection unit (80), configured for the detection of a speed of the bicycle (1), and
- a second detection unit (90), configured for the detection of a lean angle of the bicycle (1),
- a third detection unit (90), configured for the detection of a steering angle of the bicycle (1),
the computing unit (70) being configured to produce an actuation of the actuator (130) in order to produce a first rotation of the front wheel (65) in the direction of the corner centre point about a vertical axis of the front wheel (65) and a second rotation of the front wheel (65) counter to the direction of the corner centre point about the vertical axis of the front wheel (65) in a manner which is dependent on a comparison of a determined actual side slip angle with a determined limit slip angle of the bicycle (1) during detected cornering.

10. Bicycle according to Claim 9, **characterized in that**, in addition, the bicycle has
- a fourth detection unit (110), configured for the detection of a grip variable between the front wheel (65) and the roadway surface (5),
the computing unit (70) being configured to determine the limit side slip angle in addition in a manner which is dependent on the detected grip variable.

11. Bicycle according to either of Claims 9 or 10, **characterized in that**, in addition, the bicycle has
- a fifth detection unit (120), configured for the detection of a brake force on the front wheel (65),
the computing unit (70) being configured to determine the limit side slip angle in addition in a manner which is dependent on the detected brake force.

## Revendications

1. Procédé de stabilisation d'une bicyclette (1) dans les courbes, des interventions de direction sur une roue avant (65) de la bicyclette (1) étant prévues pour la stabilisation et le procédé comprenant les étapes suivantes :
- détecter (200, 210, 220) une vitesse, une position inclinée et un angle de direction de la bicyclette (1) dans un virage et
- déterminer (260) un angle de dérapage réel de la roue avant (65) en fonction de la vitesse détectée, de la position inclinée et de l'angle de direction et
- déterminer (270) un angle de dérapage limite de la roue avant (65) en fonction de la vitesse détectée, de la position inclinée et de l'angle de direction et
- comparer (280) l'angle de dérapage réel à l'angle de dérapage limite de la roue avant (65),
**caractérisé en ce que** le procédé comprend les étapes suivantes :
- générer (290) une première rotation de la roue avant (65) en direction d'un centre de courbe sur un axe vertical de la roue avant (65) en fonction de la comparaison de l'angle de dérapage réel à l'angle de dérapage limite de telle sorte que la bicyclette (1) se redresse dans le virage et
- générer (310) une deuxième rotation de la roue avant (65) dans le sens opposé à la direction du centre de la courbe sur l'axe vertical de la roue avant (65) pour stabiliser la bicyclette (1) dans les courbes.

2. Procédé selon la revendication 1, **caractérisé en ce que** le procédé comporte les étapes supplémentaires suivantes :
- détecter (230) une grandeur d'adhérence entre la roue avant (65) et la surface de la chaussée et
- déterminer en plus (270) l'angle de dérapage limite en fonction de la grandeur d'adhérence détectée.

3. Procédé selon l'une des revendications 1 et 2, **caractérisé en ce que** le procédé comporte les étapes supplémentaires suivantes :
- détecter (240) une force de freinage sur la roue avant (65) et
- déterminer en plus (270) l'angle de dérapage limite en fonction de la force de freinage détectée.

4. Procédé selon l'une des revendications 1 à 3, **caractérisé en ce que** la première rotation de la roue avant (65) est générée en fonction du dépassement de l'angle de dérapage limite par l'angle de dérapage réel.

5. Procédé selon l'une des revendications 1 à 3, **caractérisé en ce que** la première rotation de la roue avant (65) est générée en fonction du dépassement d'une valeur seuil critique pour la sécurité par le rapport de l'angle de dérapage réel à l'angle de dérapage limite.

6. Procédé selon l'une des revendications 1 à 5, **caractérisé en ce que** le procédé comporte les étapes de procédé supplémentaires suivantes :
- déceler (300) un redressement de la bicyclette (1) par la première rotation générée et
- générer (310) la deuxième rotation en fonction du redressement décelé de la bicyclette (1).

7. Procédé selon l'une des revendications 1 à 6, **caractérisé en ce que** le procédé comprend les étapes de procédé supplémentaires suivantes :
- générer (310) la deuxième rotation de la roue avant (65) au bout d'un temps spécifié après la première rotation générée.

8. Unité de calcul (70) destinée à mettre en œuvre un procédé de stabilisation d'une bicyclette dans les courbes selon l'une des revendications 1 à 7, l'unité de calcul (70) étant conçue pour
- recevoir une vitesse d'une première unité de détection (80), une position inclinée d'une deuxième unité de détection (90) et un angle de direction d'une troisième unité de détection (100) de la bicyclette (1) dans un virage et
- déterminer un angle de dérapage réel de la roue avant (65) en fonction de la vitesse, de la position inclinée et de l'angle de direction reçus et
- déterminer un angle de dérapage limite de la roue avant (65) en fonction de la vitesse, de la position inclinée et de l'angle de direction reçus et
- comparer l'angle de dérapage réel à l'angle de dérapage limite de la roue avant (65) et
- générer des premiers signaux de commande d'un actionneur disposé sur le guidon de la bicyclette pour générer une première rotation de la roue avant (65) en direction du centre de la courbe sur un axe vertical de la roue avant (65) en fonction de la comparaison de l'angle de dérapage réel à l'angle de dérapage limite de la roue avant (65) de telle sorte que la bicyclette (1) se redresse dans le virage et
- générer des deuxièmes signaux de commande de l'actionneur pour générer une deuxième rotation de la roue avant (65) dans le sens opposé à la direction du centre de la courbe sur l'axe vertical de la roue avant (65) pour stabiliser la bicyclette (1) dans la courbe.

9. Bicyclette (1) destinée à la mise en œuvre d'un procédé de stabilisation de la bicyclette dans les courbes selon l'une des revendications 1 à 7, ladite bicyclette comportant
- une unité de calcul (70) selon la revendication 8 et
- un actionneur (130) conçu pour effectuer une intervention de direction sur la roue avant de la bicyclette (1) et
- une première unité de détection (80) conçue pour détecter une vitesse de la bicyclette (1) et
- une deuxième unité de détection (90) conçue pour détecter une position inclinée de la bicyclette (1)
- une troisième unité de détection (90) conçue pour détecter un angle de direction de la bicyclette (1), l'unité de calcul (70) étant conçue pour générer, en fonction d'une comparaison d'un angle de dérapage réel déterminé à un angle de dérapage limite déterminé de la bicyclette (1) lors d'un virage décelé, une commande de l'actionneur (130) destinée à générer une première rotation de la roue avant (65) en direction du centre de la courbe sur un axe vertical de la roue avant (65) et une deuxième rotation de la roue avant (65) dans le sens opposé à la direction du centre de la courbe sur l'axe vertical de la roue avant (65).

10. Bicyclette selon la revendication 9, **caractérisée en ce que** le bicyclette comporte en outre
- une quatrième unité de détection (110) conçue pour détecter une grandeur d'adhérence entre la roue avant (65) et la surface (5) de la chaussée,
l'unité de calcul (70) étant conçue pour déterminer en plus l'angle de dérapage limite en fonction de la grandeur d'adhérence détectée.

11. Bicyclette selon l'une des revendications 9 et 10, **caractérisée en ce que** la bicyclette comporte en outre
- une cinquième unité de détection (120) conçue pour détecter une force de freinage sur la roue avant (65),
l'unité de calcul (70) étant conçue pour déterminer en plus l'angle de dérapage limite en fonction de la force de freinage détectée.
